Europäisches Patentamt

European Patent Office

Office européen des brevets

(11) Publication number: **0 327 033**
**A2**

## EUROPEAN PATENT APPLICATION

(21) Application number: 89101656.0

(51) Int. Cl.4 **G11B 7/08**

(22) Date of filing: 31.01.89

(30) Priority: 03.02.88 JP 23004/88

(43) Date of publication of application:
**09.08.89 Bulletin 89/32**

(84) Designated Contracting States:
**DE FR GB NL**

(71) Applicant: **KABUSHIKI KAISHA TOSHIBA
72, Horikawa-cho Saiwai-ku
Kawasaki-shi Kanagawa-ken 210(JP)**

(72) Inventor: **Ohtomo, Jun-ichi c/o Patent Division
Kabushiki Kaisha Toshiba 1-1 Shibaura
1-chome
Minato-ku Tokyo 105(JP)**

(74) Representative: **Henkel, Feiler, Hänzel &
Partner
Möhlstrasse 37
D-8000 München 80(DE)**

(54) **Information processing apparatus.**

(57) An optical disk apparatus of the invention includes two optical heads (3A, 3B) respectively located to confront opposing upper and lower surfaces of an optical disk (1). The optical disk (1) has recording layers (1D) formed on its upper and lower surfaces. Each optical head (3A, 3B) is mounted on a corresponding linear motor (33), and is driven such that a light beam emitted from the optical head (3A, 3B) is scanned along a scanning area extending in a radial direction of the optical disk (1). The optical heads (3A, 3B) and the linear motors (33) on which the optical heads (3A, 3B) are mounted are arranged in the optical disk apparatus such that the scanning area of a light beam emitted from one optical head (3A, 3B) does not overlap the scanning area of a light beam emitted from the other optical head (3A, 3B).

EP 0 327 033 A2

FIG. 1

# Information processing apparatus

The present invention relates to an optical disk apparatus and, more particularly, to an optical disk apparatus comprising a plurality of optical heads for recording, reproducing, and erasing information by scanning a light beam on a recording surface of an optical disk.

An optical disk apparatus has been developed as a file apparatus for filing a large amount of information. The optical disk apparatus can record a large amount of information such as documents and images at high recording density, and can retrieve information as needed to display or copy it. Therefore, the apparatus is used as a data recording means.

Recently, in order to record image and document information in a single optical disk at higher density, an optical disk having recording areas formed on both of its surfaces, i.e., the upper and lower surfaces, has been used.

A known optical disk having such a structure is referred to as an "air sandwich structure" disk. An example of a disk structure of this type is disclosed in U.S. Patent No. 4,074,282. According to this disk structure, two transparent substrates, each coated with a thin metal film as a recording medium, are bonded to each other with their respective recording media opposing each other through an air layer or the like. In information recording, a light beam which is light-modulated in accordance with an information signal is radiated onto a recording film having, e.g., a thin metal film such as a Te film. As a result of this operation, the Te film is melted or vaporized so that information is recorded as pits. The recorded information is read by radiating a light beam having a certain intensity on the recording surface of the optical disk, and detecting the intensity of the light beam reflected by the recording surface.

An optical disk apparatus having two optical heads located to substantially oppose each other through an optical disk has been proposed so as to write information on an optical disk having recording areas on both of its sides or to read information from each recording surface. An example of a structure of this type is disclosed in Japanese Patent Disclosure (Kokai) No. 61-276168, to T. Abiko. Each optical head is used for recording and reading information on and from the optical disk. Each optical head is fixed to a linear motor or the like so as to be driven to a predetermined area on the optical disk, and is driven linearly in the radial direction of the optical disk. The two optical heads are located such that their driving ranges overlap each other when viewed from the upper or lower surface of the optical disk. When information is read from, e.g., an optical disk having the air sandwich structure, a light beam emitted from one optical head is transmitted through a pit formed in the recording film. Therefore, when the respective positions of one optical head and the other optical head coincide with each other in the radial direction, the light beam emitted from one optical head is transmitted through the pit of the recording film and is incident on the other optical head. This causes erroneous reading of recorded information and servo information.

It is an object of the present invention to provide an optical disk apparatus capable of accurately reading information recorded on both surfaces of an optical disk.

Additional objects and advantages of the invention will be set forth in part in the description which follows, and in part will be obvious from the description, or may be learned by practice of the invention. The objects and advantages of the invention may be realized and attained by means of the elements and combinations particularly pointed out in the appended claims.

To achieve the objects and in accordance with the purpose of the invention, as embodied as described herein, there is provided apparatus for reproducing data from an information memory medium having opposing first and second recording layers. The apparatus comprises first means, confronting the first recording layer, for detecting information stored within a first scanning area on the first recording layer; and second means, confronting the second recording layer, for detecting information stored within a second scanning area on the second recording layer; wherein the first scanning area does not overlap the second scanning area.

The accompanying drawings which are incorporated in and constitute a part of this specification, illustrate embodiments of the invention and, together with the description, serve to explain the principles of the invention.

This invention can be more fully understood from the following detailed description when taken in conjunction with the accompanying drawings, in which:

Fig. 1 is a side view showing an optical disk apparatus having a plurality of optical heads according to a first embodiment of the present invention;

Fig. 2 is a schematic plan view showing the upper surface of the optical disk apparatus in Fig. 1;

Fig. 3 is a schematic plan view showing the upper surface of an optical disk apparatus having a plurality of optical heads according to a second embodiment of the present invention;

Fig. 4 is a sectional view showing a structure of optical disk 1 mounted in optical disk apparatus 100 of the present invention;

Fig. 5A is a plan view showing an information forming layer of a lower surface of the optical disk in Fig. 4;

Fig. 5B is a plan view showing an information forming layer of an upper surface of the optical disk in Fig. 4; and

Fig. 6 is block diagram showing an arrangement of an optical head and its peripheral circuits arranged in the optical disk apparatus of the present invention.

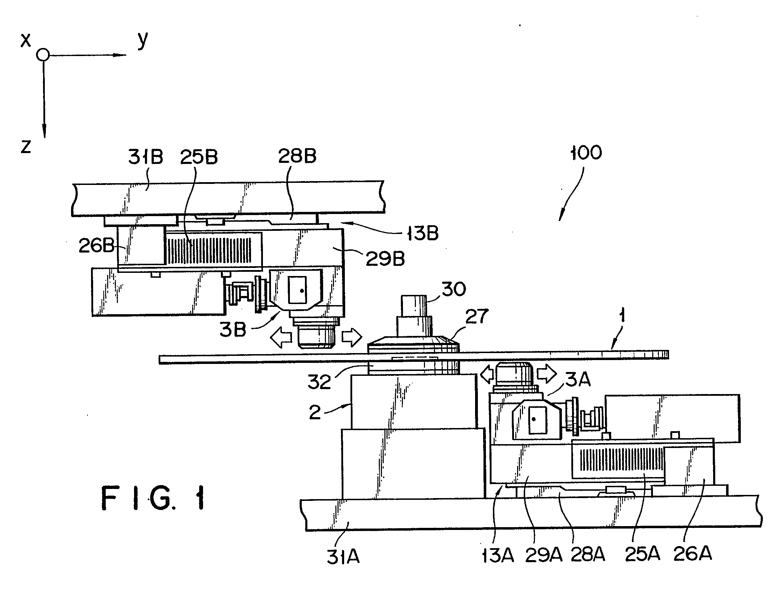

Fig. 1 is a side view showing an optical disk apparatus 100 according to a first embodiment of the present invention.

Referring to Fig. 1, a motor 2 having a screw shaft 30 for rotating an optical disk 1 is mounted on a base plate 31A. Screw shaft 30 of motor 2 extends vertically (Z direction). A circular turntable 32 is coaxially fixed to screw shaft 30. Optical disk 1 is arranged on turntable 32 horizontally (X-Y plane) so as to be pivoted coaxially with screw shaft 30 of motor 2. Optical disk 1 is urged against turntable 32 by a damping member 27. A first optical head 3A for radiating a light beam onto a lower recording film of optical disk 1 is positioned below the optical disk. First optical head 3A records and reads information on and from the lower recording surface of optical disk 1. A second optical head 3B is positioned above optical disk 1 for radiating a light beam onto an upper recording film of optical disk 1. Second optical head 3B records and reads information on and from the upper recording surface.

First and second optical heads 3A and 3B are respectively fixed to linear motors 13A and 13B for moving the first and second optical heads. Linear motor 13A, to which first optical head 3A is attached, is positioned to face the lower surface of optical disk 1. A stator 28A of linear motor 13A is fixed on base plate 31A and an armature 29A of linear motor 13A is slidably mounted on stator 28A. First optical head 3A is mounted on armature 29A. Armature 29A is adapted to be linearly reciprocated in the radial direction of optical disk 1 (in the Y direction in Fig. 1) so as to move first optical head 3A to a predetermined area on optical disk 1.

In order to detect the position of first optical head 3A with respect to optical disk 1, an optical scale 25A is attached to a side surface of armature 29A, and an optical position detector 26A is fixed on base plate 31A so as to confront optical scale 25A. Optical scale 25A includes a plurality of substantially identical slits which extend in the vertical direction (Z direction) and which are formed at substantially equal intervals. Optical position detector 26A is located at a position relative to the position of optical scale 25A such that a light beam emitted from a light source (not shown) fixed to base plate 31A is incident on detector 26A through scale 25A. With this arrangement, the intensity of the light beam emitted from the light source and incident on optical position detector 26A, cyclically changes upon movement of the slits of optical scale 25A. If a slit width is set to a predetermined value, a moving distance of optical head 3A and its position can be detected by detecting the total number of changes in the intensity of the detected light beam. Optical head 3A is linearly moved to a predetermined position in accordance with a result detected in this manner.

Since the structure of second optical head 3B located to oppose the upper surface of optical disk 1 is the same as that of first optical head 3A described above, a detailed description thereof is not provided. The invention as embodied herein thus includes first driving means for driving the first optical head and second driving means for driving the second optical head.

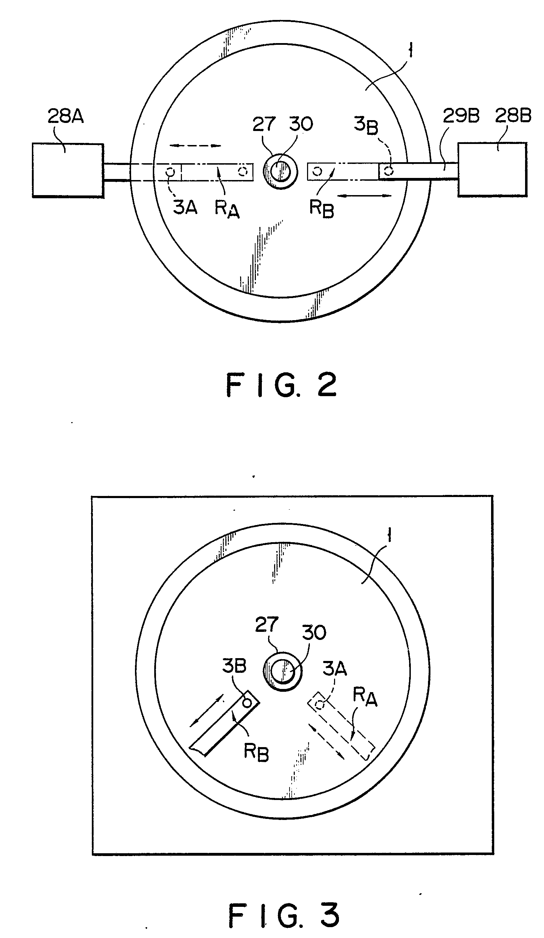

According to the optical disk apparatus of the present invention, in order to record and read information on and from both the surfaces of optical disk 1, first and second optical heads 3A and 3B are located to oppose the disk surfaces, respectively. In addition, as shown in Fig. 2 (first embodiment) and Fig. 3 (second embodiment), optical heads 3A and 3B are located in such a manner that their driving ranges do not overlap each other when viewed from the upper surface of optical disk 1. In other words, the driving ranges of linear motors 13A and 13B for respectively driving optical heads 3A and 3B are set to prevent the scanning areas of light beams emitted by the first and second optical heads from overlapping each other. More specifically, the positions of optical heads 3A and 3B are determined so as to prevent a light beam emitted from, e.g., first optical head 3A from being erroneously transmitted through optical disk 1 and becoming incident on second optical head 3B. It is preferable that optical heads 3A and 3B are located as shown in Fig. 2 so as not to cause their driving ranges to overlap each other. As seen in Fig. 2, the driving ranges of optical heads 3A and 3B coincide with a straight line extending radially through the center of rotation of screw shaft 30 of motor 2. The illustrated arrangement facilitates the mounting of first and second optical heads 3A and 3B. As a result, the driving ranges of first and second optical heads 3A and 3B are set such that the scanning ranges of light beams emitted from optical heads 3A and 3B do not overlap with each other.

While, as illustrated in Fig. 2, optical heads 3A and 3B are located at positions where they are spatially symmetrical about the center of rotation of optical disk 1, the driving ranges of first and second optical heads 3A and 3B need not always be set to coincide with the straight line extending through the center of rotation of screw shaft 30 of motor 2. Any change in the position of the driving range can be made so long as the light beams emitted from first and second optical heads 3A and 3B do not overlap each other. For example, as shown in Fig. 3, the driving ranges of optical heads 3A and 3B may be set such that optical heads 3A and 3B are reciprocated in different directions defining a specific angle with the center of the rotation of optical disk 1. When optical heads 3A and 3B are arranged in such a manner, their driving ranges do not overlap each other and information can be stably recorded and read.

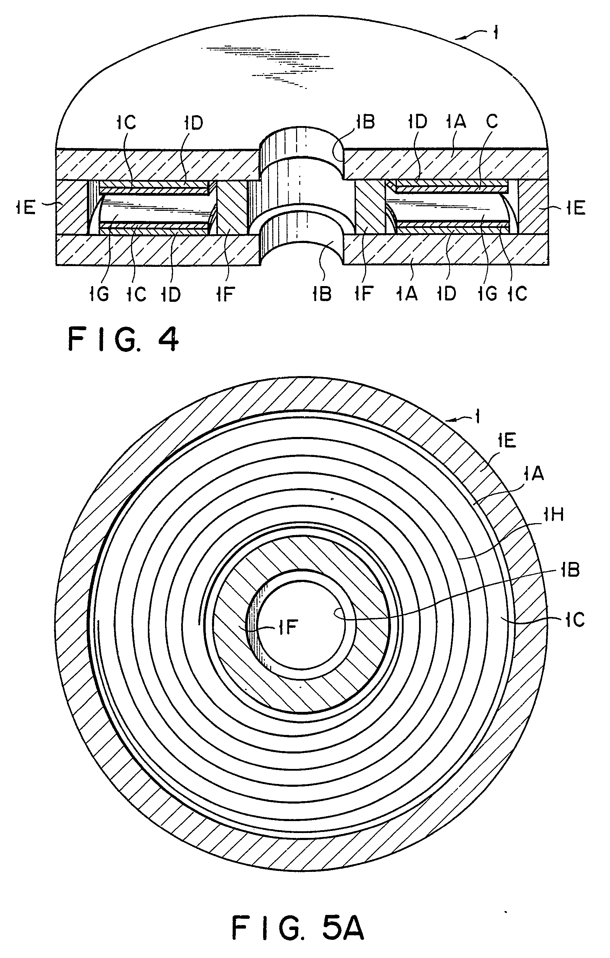

Fig. 4 is a sectional view of optical disk 1 in Figs. 1 to 3. Optical disk 1 in Fig. 4 has the so-called "air sandwich structure." Optical disk 1 having the air sandwich structure includes a pair of disk-like substrates 1A each comprising a transparent plastic plate. Rotation center hole 1B is formed in a central portion of disk-like substrates 1A so as to allow screw shaft 30 of motor 2 for rotating optical disk 1 to be inserted therein. An annular intermediate protective layer 1D is formed on an inner surface of each substrate 1A. An information forming layer 1C, including a light reflecting layer comprising a thin metal film, such as a Te film, is formed on each protective layer 1D. Substrates 1A each having information forming layer 1C thereon are bonded to each other through concentrically arranged annular outer and inner spacers 1E and 1F, respectively, that form an adhesive layer. As a result, information forming layers 1C oppose each other through an air layer or hollow portion 1G. Optical disk 1 having information forming layers 1C formed at upper and lower positions therein is provided in this manner. Substrate 1A preferably has a thickness of 0.3 mm or more so as to prevent interference with data processing for recording, reading, or the like even if very fine dust adheres to a surface of optical disk 1, and has a thickness of 5 mm or less so as to focus a laser beam. Substrate 1A is more preferably constituted by a transparent acrylic plate having a thickness of 1.0 to 1.5 mm in consideration of strength and cost.

Fig. 5A is a plan view showing information forming layer 1C of the lower surface of optical disk 1 arranged in the above described manner, with substrate 1A and protective layer 1D of the lower surface not shown for clarity. A spiral groove 1H is formed in information forming layer 1C of optical disk 1 so as to expand outward in the radial direction and rotate clockwise. Spiral groove 1H is formed to define a recording area on information forming layer 1C. Information is recorded or read along spiral groove 1H.

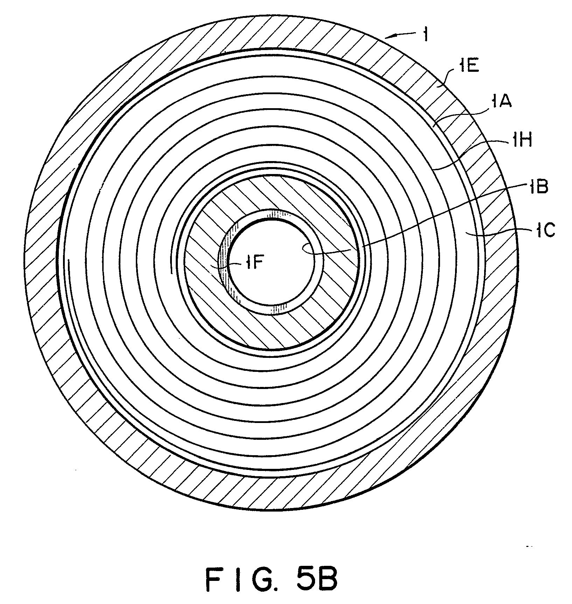

Fig. 5B is a plan view showing information forming layer 1C of the opposite, upper surface of optical disk 1, with substrate 1A and protective layer 1D of the upper surface not shown for clarity. Spiral groove 1H is formed in information forming layer 1C on the upper surface of optical disk 1 so as to expand outward in the radial direction and rotate clockwise. In other words, recording tracks formed in upper and lower information forming layers 1C extend spirally in the opposite directions when optical disk 1 is viewed from above. That is, the spiral directions are opposite to each other. In this manner, spiral grooves 1H serving as record tracks are formed in both the information forming layers 1C of single optical disk 1. Accordingly, if spiral grooves 1H are formed in the same direction when viewed from the respective surfaces, the spiral directions of spiral grooves 1H are different from each other with respect to one rotating direction of optical disk 1. Therefore, information may be recorded from the inside to the outside of optical disk 1 in one spiral groove 1H, whereas information may be recorded from the outside to the inside in the other spiral groove 1H.

When spiral grooves 1H are formed in the manners shown in Figs. 5A and 5B, spiral grooves 1H formed in upper and lower information forming layers 1C can be manufactured using the same stamper. Therefore, the manufacturing cost of optical disk 1 can be decreased. When information is recorded on optical disk 1 arranged in this manner, a convergent light beam which is light-modulated in accordance with an information signal is emitted from each of optical heads 3A and 3B, located to oppose the respective surfaces of optical disk 1 as shown in Fig. 1, and is focused on information forming layer 1C, comprising Te or the like, through disk-like substrate 1A. Information forming layer 1C serves as an information recording film such that, e.g., Te is melted or vaporized in accordance with the intensity of the focused light beam. As a result, information is recorded as a pit.

When the recorded information is read, a light beam having a predetermined intensity is radiated onto a recording area on optical disk 1, wherein information is recorded as the pit, and the intensity of the light beam reflected by the recording area is detected. Optical heads 3A and 3B of the present invention are located such that the scanning areas of light beams emitted from optical heads 3A and 3B do not overlap each other. For this reason, even if a light beam emitted from one optical head toward optical disk 1 is transmitted through a pit formed in information forming layer 1C, the light beam will not be incident on the other optical head. Therefore, this arrangement prevents the erroneous reading of recording and servo information with one optical head, which is caused by a light beam emitted from the other optical head. Although air sandwich type optical disk 1 is used in this embodiment, an optical disk having another structure which has recording areas on the upper and lower surfaces may be used.

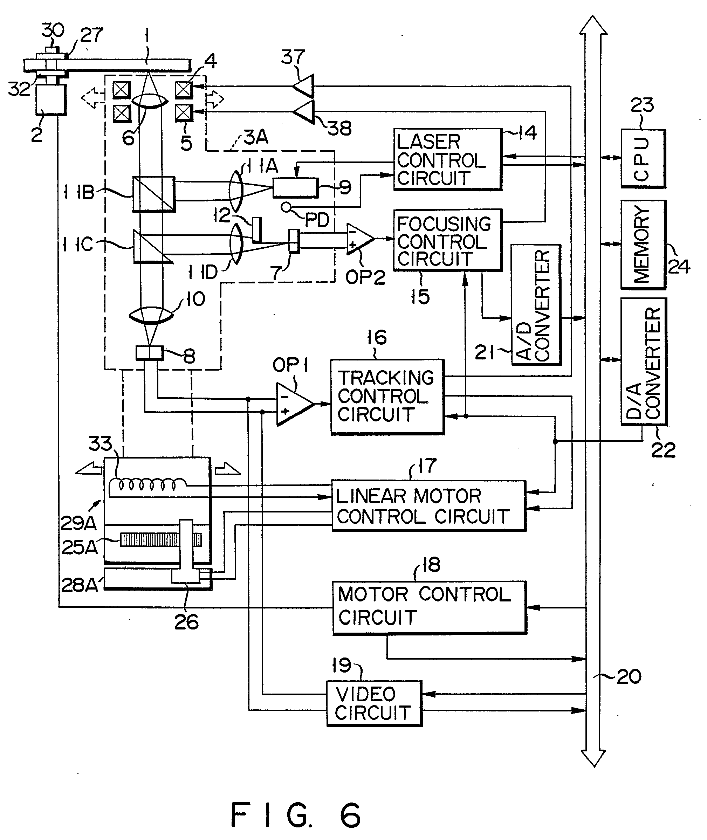

Fig. 6 shows an arrangement of optical disk apparatus 100 in Fig. 1, and its peripheral circuits. Optical heads 3A and 3B shown in Fig. 1 have identical structures, and their peripheral circuits have identical structures. For this reason, Fig. 6 shows only an arrangement of optical head 3A. A guide groove (track) having, e.g., a spiral shape, is formed in optical disk 1 so as to define a recording area. Optical disk 1 is rotated, at a predetermined speed, by motor 2 which is controlled by a motor control circuit 18. Recording and reading information on and from optical disk 1 are performed by a plurality of optical elements arranged in optical head 3A. Optical head 3A is fixed to a driving coil 33 constituting armature 29A of linear motor 13A. Driving coil 33 is connected to a linear motor control circuit 17. The position of optical head 3A relative to optical disk 1 is detected by optical scale 25A fixed to armature 29A of the linear motor, a light source (not shown) located on stator 28A of linear motor 13A to align with both ends of optical scale 25A, and linear motor position detector 26A. Position detector 26A is located relative to optical scale 25A such that the light beam emitted from the light source is incident on the position detector through the optical scale. A signal detected by linear motor position detector 26A is supplied to linear motor control circuit 17 and is used to drive optical head 3A to a predetermined area on optical disk 1. A permanent magnet (not shown) is attached to a stator 28A of the linear motor so that when a current is supplied from linear motor control circuit 17, driving coil 33 is excited and optical head 3A is moved in the radial direction of optical disk 1.

Optical head 3A comprises an objective lens 6 for focusing a light beam on optical disk 1. Objective lens 6 is held by a leaf spring (not shown) or the like. In addition, driving coils 4 and 5 are arranged around objective lens 6. Coils 4 and 5 are respectively used to move objective lens 6 in the focusing direction (the direction of the optical axis of lens 6) and in the tracking direction (perpendicular to the optical axis of lens 6). A semiconductor laser (laser diode) 9 serving as a light source, whose light intensity is controlled by a laser control circuit 14, is included in optical head 3A. A laser beam emitted from semiconductor laser 9 is focused onto optical disk 1 through a collimator lens 11A, a half prism 11B, and objective lens 6. The light beam focused on optical disk 1 is reflected by its recording area and is returned to objective lens 6. The light beam returned to objective lens 6 is transmitted through half prism 11B, and is incident on a half prism 11C. A light beam component corresponding to half of the light intensity of the light beam incident on half prism 11C is reflected, and the other light beam component is transmitted by half prism 11C. The reflected light beam is guided to a focus position sensor 7 through a condenser lens 11D and a knife-edge 12. The transmitted light beam is guided to a pair of tracking position sensors 8 through a condenser lens 10.

An output signal from tracking position sensors 8 is supplied to a tracking control circuit 16 through an operational amplifier OP1. A signal output from tracking control circuit 16, which corresponds to an error amount of the light beam on the track, is supplied to linear motor control circuit 17, and is supplied, through an amplifier 37, to driving coil 4 for tracking the track. As a result, objective lens 6 is moved in the radial direction of optical disk 1 such that the light beam is radiated onto a predetermined track, i.e., a groove formed in optical disk 1.

Focus position sensor 7 outputs a signal corresponding to the focusing state of the light beam focused on a recording area of optical disk 1. This output signal is supplied to a focusing control circuit 15 through an operational amplifier OP2. An output signal from control circuit 15 is supplied through amplifier 38 to focusing drive coil 5. Objective lens 6 is moved in the direction of its optical axis in accordance with the supplied signal. With this operation, a light beam is controlled to be in a just-in-focus state on a recording area of optical disk 1.

While the focusing and tracking states are determined as described above, information recorded on optical disk 1 is reproduced. The intensity of a light beam detected by tracking position sensors 8 is changed in accordance with the shape of a pit formed in a track. Therefore, information is read by processing the total sum of signals detected by sensors 8 using a video circuit 19.

Laser control circuit 14, focusing control circuit 15, tracking control circuit 16, linear motor control circuit 17, motor control circuit 18 for driving motor 2, video circuit 19, and the like are controlled by a CPU 23 through a bus line 20. CPU 23 supplies command signals to the respective circuits in accordance with programs in memory 24, thereby performing predetermined operations. An A/D converter 21 and a D/A converter 22 are arranged in the apparatus so as to allow transfer of information between focusing control circuit 15, tracking control circuit 16, linear motor control circuit 17, and CPU 23. A light-receiving element (e.g., a laser monitor diode) PD for detecting a light output from semiconductor laser 9 is provided near laser 9. A detection output from light-receiving element PD is fed back to laser control circuit 14.

In order to simplify the description, Fig. 6 shows optical head 3A arranged below optical disk 1. However, optical head 3B arranged above optical disk 1 and its peripheral circuits shown in Fig. 1 have the same structures as those of optical head 3A and its peripheral circuits. Since optical heads 3A and 3B, and their peripheral circuits, have the same structures, information can be read from both the recording surfaces of optical disk 1 in the same manner. Therefore, an optical disk apparatus capable of easily recording and reading information is obtained. The invention as embodied herein thus includes first and second optical heads, each having means for radiating a light beam toward a recording layer of the optical disk, and detecting means for detecting the light beam reflected by the recording layer.

In the optical disk apparatus of the present invention, the positions of optical heads 3A and 3B are set such that the scanning areas of light beams emitted from optical heads 3A and 3B do not overlap each other. Therefore, even if a light beam is emitted from one optical head toward optical disk 1 and is transmitted through a pit formed in information forming layer 1C, the light beam will not be incident on the other optical head. This prevents erroneous reading of recording and servo information using one optical head, which is caused by a light beam from the other optical head. Although in the present invention one optical head is arranged for each recording surface of the optical disk, a plurality of optical heads may be arranged for each recording surface. In this case, the driving areas of linear motors for driving the respective optical heads are set such that the scanning area of a light beam emitted from each optical head does not overlap with the scanning areas of light beams emitted from other optical head.

Thus, it is intended that the present invention cover the modifications and the variations of this invention provided they come within the scope of the appended claims and their equivalents.

## Claims

1. Apparatus for reproducing data from an information memory medium (1) having opposing first and second recording layers (1D), said apparatus comprising:
first means (3A), confronting the first recording layer (1D), for detecting information stored within a first scanning area on the first recording layer (1D); and
second means, confronting the second recording layer (1D), for detecting information stored within a second scanning area on the second recording layer (1D);
characterized in that said first scanning area does not overlap said second scanning area.

2. The apparatus of claim 1, characterized in that said information memory medium (1) comprises a disk-like substrate (1A), said first and second recording layers (1D) respectively being disposed on opposing first and second sides of the disk-like substrate (1A).

3. Apparatus for reproducing data from an information memory medium (1) having opposing first and second recording layers (1D), said apparatus comprising:
first optical head means (3A), confronting the first recording layer (1D), for focusing a first light beam onto the first recording layer (1D) and for detecting a reflection of the first light beam representative of data recorded on the first recording layer (1D);
first positioning means (13A) for controllably positioning said first optical head means (3A) at a predetermined location within a first scanning area relative to the first recording layer (1D);
second optical head means (3B), confronting the second recording layer (1D), for focusing a second light beam onto the second recording layer (1D) and for detecting a reflection of the second light beam representative of data recorded on the second recording layer (1D); and
second positioning means (13B) for controllably positioning said second optical head means (3B) at a predetermined location within a second scanning area relative to the second recording layer (1D);
characterized in that said first scanning area does not overlap said second scanning area.

4. The apparatus of claim 3, characterized in that said first and second scanning areas are radially aligned through a center of rotation of the information memory medium (1).

5. The apparatus of claim 3, characterized in that said first and second scanning areas extend in different radial directions from a center of rotation of the information memory medium (1).

6. Information processing apparatus for detecting information recorded on a disk-like substrate (1A) having opposing first and second recording layers (1D), said apparatus comprising:
a first optical head (3A) having means for radiating a first light beam in a first direction toward said first recording layer (1D) of said disk-like substrate (1A), and first detecting means (8) for detecting the first light beam reflected by said first recording layer (1D) of the disk-like substrate (1A);

first driving means (13A) for driving said first optical head (3A), a first driving area of said first driving means (13A) being provided such that the first light beam radiated from said first optical head (3A) is scanned along a first scanning area extending in a radial direction of the disk-like substrate (1A);

a second optical head (3B) having means for radiating a second light beam in a second direction opposite to the first direction and toward said second recording layer (1D) of the disk-like substrate (1A), and second detecting means (8) for detecting the second light beam reflected by said second recording layer (1D) of the disk-like substrate (1A); and

second driving means (13B) for driving said second optical head (3A), a second driving area of said second driving means (13B) being provided such that the second light beam radiated from said second optical head (3B) is scanned along a second scanning area extending in a radial direction of the disk-like substrate (1A);

characterized in that said first and second scanning areas are positioned to not overlap each other.

7. The apparatus of claim 6, characterized in that the driving areas of said first and second driving means (13A, 13B) are provided at positions where the scanning areas of the first and second light beams are radially aligned with a center of rotation of the disk-like substrate (1A).

8. The apparatus of claim 6, characterized in that the driving areas of said first and second driving means (13A, 13B) are provided such that the scanning areas of the first and second light beams respectively extend in different radial directions from a center of rotation of the disk-like substrate (1A).

9. The apparatus of claim 6, characterized by further comprising means (2) for rotating the disk-like substrate (1A) about a center of rotation thereof.

10. The apparatus of claim 6, characterized in that each of said first and second driving means (13A, 13B) includes linear motor means (17, 33) having a stator and an armature, the armature being movable along a radial direction of the disk-like substrate (1A) by operation of the linear motor.

11. An information processing system, characterized by comprising:
a disk-like substrate (1) having opposing first and second recording layers (1D) on which information can be recorded;
a first optical head (3A) having means (9, 11A, 11B, 6) for radiating a first light beam in a first direction toward said first recording layer (1D) of said disk-like substrate (1A), and first detecting means (8) for detecting the first light beam reflected by said first recording layer (1D) of the disk-like substrate (1A);

first driving means (13A) for driving said first optical head (3A), a first driving area of said first driving means (13A) being set such that the first light beam radiated from said first optical head (3A) is scanned along a first scanning area extending in a radial direction of the disk-like substrate (1);
a second optical head (3B) having means (9, 11A, 11B, 6) for radiating a second light beam in a second direction opposite to the first direction and toward said second recording layer (1D) of the disk-like substrate (1), and second detecting means (8) for detecting the second light beam reflected by said second recording layer (1D) of the disk-like substrate (1); and

second driving means (13B) for driving said second optical head (3B), a second driving area of said second driving means (13B) being set such that the second light beam radiated from said second optical head (3B) is scanned along a second scanning area extending in a radial direction of the disk-like substrate (1);
characterized in that said first and second scanning areas are positioned to not overlap each other.

12. The apparatus of claim 11, characterized in that the driving areas of said first and second driving means (13A, 13B) are provided at positions where the scanning areas of the first and second light beams are radially aligned with a center of rotation of the disk-like substrate (1A).

13. The apparatus of claim 11, characterized in that the driving areas of said first and second driving means (13A, 13B) are provided such that the scanning areas of the first and second light beams respectively extend in different radial directions from a center of rotation of the disk-like substrate (1A).

14. The apparatus of claim 11, characterized by further comprising means (2) for rotating the disk-like substrate about a center of rotation thereof.

15. The apparatus of claim 11, characterized in that each of said first and second driving means (13A, 13B) includes linear motor means (17, 33) having a stator and an armature, the armature being movable along a radial direction of the disk-like substrate (1A) by operation of the linear motor.

16. The apparatus of claim 11, characterized in that each of said first and second recording layers (1D) includes a spiral groove (1H) defining a recording area, the respective spiral grooves (1H) each having the form of a clockwise spiral expanding outward in a radial direction, the recording areas on said first and second recording layers (1D) thereby spirally extending in opposite directions.

FIG. 1

F I G. 2

F I G. 3

F I G. 4

F I G. 5A

F I G. 5B

F I G. 6